**Europäisches Patentamt**

(19) **European Patent Office**

**Office européen des brevets**

(11) **EP 0 644 800 B1**

(12) **EUROPEAN PATENT SPECIFICATION**

(45) Date of publication and mention
of the grant of the patent:
**14.01.1998 Bulletin 1998/03**

(51) Int. Cl.$^6$: **B01J 23/10**, B01D 53/96,
F01N 3/28

(21) Application number: **93904048.1**

(22) Date of filing: **12.02.1993**

(86) International application number:
**PCT/FI93/00048**

(87) International publication number:
**WO 93/15834 (19.08.1993 Gazette 1993/20)**

(54) **SUPPORT OF A THREE-WAY CATALYST AND METHOD OF PRODUCING THE SAME**

TRÄGER FÜR EINEN DREIWEGKATALYSATOR UND METHODE ZUR DESSEN HERSTELLUNG

SUPPORT POUR CATALYSEUR A TRIPLE ACTIVITE ET SON PROCEDE DE PRODUCTION

(84) Designated Contracting States:
**DE FR GB IT**

(30) Priority: **13.02.1992 FI 920620**

(43) Date of publication of application:
**29.03.1995 Bulletin 1995/13**

(73) Proprietor: **KEMIRA OY**
**SF-02271 Espoo (FI)**

(72) Inventors:
• **RAVOLA, Sointu**
**SF-90560 Oulu (FI)**

• **AITTA, Eero**
**SF-91410 Jokirinne (FI)**

(74) Representative:
**Sexton, Jane Helen et al**
**J.A. KEMP & CO.**
**14 South Square**
**Gray's Inn**
**London WC1R 5LX (GB)**

(56) References cited:
**EP-A- 0 125 565**          **DE-A- 2 339 513**
**DE-A- 3 913 972**          **DE-C- 3 743 626**

EP 0 644 800 B1

## Description

The invention relates to a support of a three-way catalyst, the support containing cerium. The invention also relates to a method of producing the support. The invention additionally relates to a three-way catalyst containing such a support.

The basic structure of a catalyst comprises a carrier, a support layer, and catalyst metals. On the surface of either a ceramic or a metallic honeycomb of a carrier there is usually gamma-$Al_2O_3$ as a support. Its function is, among other things, to form a maximal surface for the noble metals serving as catalysts. For example, alkaline earth metals and lanthanides are used as additives improving, among other things, the thermal durability of this support.

By a three-way catalyst is meant a catalyst in which, simultaneously, carbon monoxide is oxidized to carbon dioxide, hydrocarbons are oxidized to carbon dioxide and water, and nitrogen oxides are reduced to nitrogen. These reactions occur catalyzed by catalytically active elements. These elements are typically, for example platinum, rhodium, palladium or ruthenium. The catalytically active substance used in a three-way catalyst may also contain a number of base metals. Ruthenium and nickel are known as catalysts for the reduction of NO. Fe, Cu, Mn, Sn, Ge, U, Re, Ga and Y have also been used as additives. The base metals are added by impregnation with their nitrate, chloride, acetate and citrate solutions. In the catalyst support there is commonly used cerium, the function of which is to store oxygen. It does this by changing its oxidation number, as is described below in greater detail.

DE application publication 2 339 513 discloses a method in which a metal honeycomb is coated, before the adding of the catalyst layer, with a slurry made by mixing $Ce(NO_3)_3 \cdot 6H_2O$ with activated $Al_2O_3$ powder in water. This slurry was dried, ground and calcined, whereafter it was mixed with water and nitric acid. The honeycomb was dipped in this mixture before it was coated with a catalyst.

FI application 883971 discloses an exhaust gas purifying catalyst made up of a monolithic support on the surface of which there is produced a layer of active alumina which contains cerium oxide in addition to other compounds. In FI application 884977, the cerium oxide content is varied according to the form in which the alumina is used; the $Al_2O_3$ may be either on the surface of an inert, porous or monolithic carrier or in the form of profiled separate pieces.

GB patent 1 492 929 discloses a catalyst in which there is, on the surface of a metal substrate, an alumina layer containing, among others, oxides of rare earth metals.

In the exhaust gas of a gasoline automobile, the oxygen reduction conditions fluctuate according to the driving situation. In order for the catalyst to perform maximally well under fluctuating conditions, its support mixture should be capable of binding and releasing oxygen according to need. In current products, the oxygen is stored by cerium, which is added in various amounts, depending on the producer of the support material.

The ability of cerium to bind and release oxygen is due to the following chemical reaction between its oxygen compound oxide and gaseous oxygen:

$$2\ Ce_2O_3 + O_2 \leftrightarrow 4\ CeO_2 \qquad (I)$$

The reaction is reversible, and the reaction equilibrium is on either side, depending on the partial pressure of oxygen, i.e. cerium is in the form of $CeO_2$ under oxidizing conditions and in the form of $Ce_2O_3$ under reducing conditions.

So far the maintenance and promotion of the performance of cerium has been based on making use of stabilization of the thermal durability, i.e. crystal size, of its oxides by any one or several of the lanthanides. Lanthanum is most commonly used for this purpose. Application publication WO 89/11906 discloses a possibility of using europium as an alternative to cerium for storing oxygen in a three-way catalyst. Europium may also be present as an impurity in present-day catalysts if unpurified cerium oxide is used in the catalyst carrier. In this case it is present in such a small amount among other lanthanides that it is of no significance.

In the literature there has also been presented an observation according to which gadolinium (Gd) has an ability to promote the change of the oxidation number of cerium from +3 to +4. The explanation given for the facilitation of the change of the oxidation number is the ability of the cation, which is foreign but resembles cerium very much in its properties and ion size, to act so as to increase the ionic conductivity of the cerium oxide crystal.

The problem involved with the current supports of three-way catalysts is that the action of the cerium in them is not the best possible. The object of the present invention is to provide a support and to describe a method of producing it by means of which the catalytic performance of cerium can be improved considerably. This object is achieved using the support, according to the invention, of a three-way catalyst, the support being mainly characterized by what is stated in the characterizing clause of Claim 1.

The invention is based on the surprising observation that, by adding europium to cerium, in an amount substantially greater than the amount in which it is present in a natural lanthanide oxide, the catalytic performance of cerium is considerably enhanced. The same applies to the adding of terbium, ytterbium, samarium and praseodymium, either separately or together.

The most stable oxidation number of lanthanides in their compounds is +3. Cerium, europium and ytterbium deviate in this respect most clearly from the other lanthanides, since they have also other quite stable oxidation numbers. For cerium there is known the oxidation number +4, and for europium and ytterbium the oxidation number +2 in their compounds. This phenomenon is due to the special structure of the 4f electron orbit in the said elements. The filling of the electron orbit takes place so that first each of its orbitals is occupied by 1 electron as the atomic number increases (7 orbitals on the 4f orbit), and only after each orbital has one electron the orbitals begin to be occupied each by a second electron. A completely empty, a half-occupied and a full electron orbit are more stable in their energy than are the intermediate states. Ce 4+, Eu 2+ and Yb 2+ represent, in that order, an empty, a half-filled and a full 4f electron orbit.

The object of the present invention is thus to use europium to promote the change of the oxidation number of cerium on the basis of the following reactions:

$$2 Ce_2O_3 + O_2 \leftrightarrow 4 CeO_2 \tag{II}$$

$$2 Eu_2O_3 \leftrightarrow 4 EuO + O_2 \tag{III}$$

i.e. the sum reaction

$$Ce_2O_3 + Eu_2O_3 \leftrightarrow 2 CeO_2 + 2 EuO \tag{IV}$$

These reactions occurring in a mixed oxide crystal facilitate the change of the oxidation number of cerium from 3 to 4 and _vice versa_. In the mixed oxide, europium atoms replace some of the cerium atoms in the crystal lattice of $CeO_2$. If another element in addition to europium is added to cerium oxide, the performance of the mixed oxide is inhibited or weakened. The phenomenon produced by means of europium improves the catalytic performance of cerium, i.e. its ability to change rapidly its oxidation number and thereby to bind/release oxygen. It is an object of the invention specifically to provide for the support a mixed oxide in which the reactions according to Formulae I-IV occur. Furthermore, it is essential in the invention that the amount of europium is small in proportion to the amount of cerium (0 - 9 %), and that other lanthanides are not present in the mixed oxide of these two elements. Europium thus serves as a promotor of cerium in Reaction (I), which is also demonstrated in the following examples.

The support materials to which the invention relates can be produced by applying two principles: cerium and europium are added to a slurry of the support material in the form of solutions, for example aqueous solutions of nitrate salts, and they form a mixed oxide with each other during the calcination step of the production. An other possibility is to prepare first a mixed oxide of the salts of these elements, for example their nitrates, by using a heating treatment, and to add this mixed oxide to the support material only thereafter. The rest of the support material may be, for example, alumina, silica, or titanium oxide. The following examples describe the promoting effect on the performance of a catalyst which contains alumina when europium is added to cerium.

The invention also relates to a three-way catalyst for purifying exhaust gases, the catalyst comprising a carrier, which may, for example, be a ceramic or metallic honeycomb, and on top of the carrier, the support defined above and at least one catalytically active element attached to the support, the active element being, for example, platinum, rhodium, palladium and/or ruthenium.

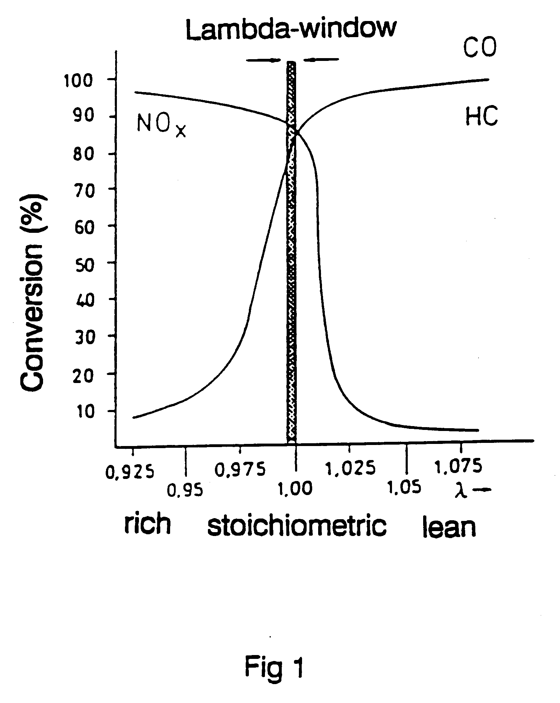

The invention is described below in greater detail with the help of examples and with reference to Figure 1, which depicts the conversion of carbon monoxide (CO), hydrocarbons (HC) and nitrogen oxides ($NO_x$) as a function of the mixing proportions.

Example 1

To test the performance of a three-way catalyst containing europium, terbium or praseodymium in addition to cerium and to compare it to a three-way catalyst containing only cerium, a test series was performed on catalyst samples 1-7, which were prepared as follows. Sample 1, which served as a reference sample in the test series and contained only cerium, was prepared according to the following formula:

| Ce nitrate solution (37 % by weight) $CeO_2$ amount | 24.8 g |
|---|---|
| $H_2O$ | 83.3 g |
| $HNO_3$ (65 %) | 4.8 g |
| $Al_2O_3$ | 79.4 g |

The compounds were slurried together, wet-ground for 2 h, and applied to a hot-strength steel foil. The sample was calcined for 4 h at 550 °C, and thereafter it was impregnated with a platinum solution ($H_2PtCl_6$) so that the amount of platinum was 0.23 % of the weight of the whole sample. The sample was reduced at 480 °C with hydrogen. After the reduction, the sample was impregnated with a rhodium solution ($RhCl_3 \cdot 3\ H_2O$) so that the amount of Rh was 0.04 % of the entire weight, and reduction with hydrogen was repeated.

Samples 2 - 5 were prepared in the same manner as Sample 1, except that a portion of the cerium was replaced with europium. The europium reagent used was europium nitrate. In Sample 2 the amount of $Eu_2O_3$ was 2.2 % of the amount of $CeO_2$, in Samples 3, 4, 5 the amounts of $Eu_2O_3$ were, respectively, 4.4 %, 8.8 % and 44.0 % of the amount of $CeO_2$. Sample 6 was prepared in the same manner as the others, but 4.4 % of the $CeO_2$ was replaced with praseodymium, using praseodymium nitrate. Sample 7 was prepared so that 4.4 % of the $CeO_2$ was replaced with terbium, using terbium nitrate.

The samples were tested using a synthetic exhaust gas having a composition which corresponded to the typical exhaust gas of an automobile equipped with a three-way catalyst. In the testing, the oxygen content of the exhaust gas was pulsed at a frequency (1 Hz) typical of the automobile control system, on both sides of the exhaust gas composition corresponding to a stoichiometric mixture. Thus, fluctuation between oxygen-rich and oxygen-poor was obtained during the test.

The performance of a three-way catalyst is described by its light-off value, by the conversion of harmful components to non-harmful after light-off while the catalyst is performing at full capacity, and by the impact of the fluctuation in the mixing proportions on the performance within the area of the so-called lambda window. The light-off value is usually the temperature at which the harmful components of exhaust gas are purified 50 %.

Tables 1 and 2 show the light-off values and purifying capacity of the reference sample and of catalyst samples, 1-5, containing different amounts of europium, within the range of full performance with respect to carbon monoxide, hydrocarbons and nitrogen oxides.

Table 1

| Light-off values of catalyst samples with respect to carbon monoxide, hydrocarbons and nitrogen oxides in exhaust gas. | | | | |
|---|---|---|---|---|
| Sample | $Eu_2O_3$ (%) * | Light-off temperature (°C) | | |
| | | CO | HC | $NO_x$ |
| 1 | 0 | 242 | 255 | 244 |
| 2 | 2.2 | 236 | 249 | 238 |
| 3 | 4.4 | 230 | 250 | 236 |
| 4 | 8.8 | 230 | 240 | 232 |
| 5 | 44.0 | 274 | 285 | 272 |

* calculated from the amount of cerium oxide

Table 2

| Full-capacity purification performance of the catalyst samples with respect to carbon monoxide, hydrocarbons and nitrogen oxides. | | | |
|---|---|---|---|
| Sample | Conversions (%) | | |
| | CO | HC | $NO_x$ |
| 1 | 95 | 97 | 96 |
| 2 | 95 | 98 | 97 |
| 3 | 97 | 99 | 98 |
| 4 | 97 | 99 | 98 |
| 5 | 91 | 94 | 86 |

The effect of the mixing proportion within the so-called lambda window on the performance of the catalyst is estimated by measuring the purification efficiency on both sides of the so-called stoichiometric mixture point. The wider the mixing ratio range within which the catalyst performs, the better the catalyst is. In the following table, the extent of the so-called lambda window is shown for the sake of simplicity as proportional values. A higher number of points indicates superiority of the catalyst sample.

Table 3

| Performance of catalyst samples with different mixing proportions within the so-called lambda window. | |
|---|---|
| Sample | Points |
| 1 | 13.4 |
| 2 | 15.4 |
| 3 | 16.7 |
| 4 | 17.5 |
| 5 | 10.1 |

It can be seen that europium added to cerium improves the performance of the three-way catalyst within all areas describing the performance: light-off value, full-capacity conversion, and with respect to the lambda window, when the europium oxide content is less than 10 % of the amount of cerium oxide.

In the three-way catalyst, oxidation is effected by the oxygen released from the reduction reactions. Thus the ratio of the components to be oxidized to those to be reduced in the exhaust gas should be correct. This situation is achieved if the motor is running at the stoichiometric air-to-fuel ratio, i.e. lambda = 1. Figure 1 shows the purification efficiency of a three-way catalyst as a function of lambda. The air-to-fuel ratio is adjusted with the aid of a so-called lambda sensor as the load of the motor fluctuates. The aim is to maintain the mixing proportion within the lambda window shown in Figure 1.

Example 2

The background of the present invention is the exceptionally strong tendency of europium to have the valence of +2 in its compounds. To ascertain this, the performances of catalysts containing europium, praseodymium and terbium in the purification of carbon monoxide, hydrocarbons and nitrogen oxides were investigated in exhaust gas. Praseodymium having a valence of +3 has an ion size very close to that of cerium(III). Terbium may in its compounds have a valence of +3 or +4, although its tendency to have a valence of +4 in compounds is weaker than that of cerium. The following table shows the performances of samples containing europium, prasebdymium and terbium, rated using points (Samples 3, 6 and 7).

Table 4

| Results of tests of the catalytic performances of catalyst samples 1, 3, 6 and 7. | | | | | | |
|---|---|---|---|---|---|---|
| Sample no. | $M_2O_3$ | $M_2O_3$ (%)* | Points | | | |
| | | | Light-off value | ConverLambda sion window | | Total |
| 1 | - | - | 41.2 | 29.4 | 13.4 | 84.0 |
| 3 | $Eu_2O_3$ | 4.4 | 43.2 | 32.2 | 16.7 | 92.1 |
| 6 | $Pr_2O_3$ | 4.4 | 35.4 | 27.9 | 4.9 | 68.2 |
| 7 | $Tb_2O_3$ | 4.4 | 36.9 | 32.7 | 5.9 | 75.5 |

\* Calculated from the amount of cerium oxide

According to Table 4, only europium is capable of improving the properties of the support catalytically. Thus praseodymium(III), which has an ion size almost that of cerium(III), does not increase the ionic conductivity of cerium oxide, as the literature claims gadolinium does. Rather, the improving effect of gadolinium on the oxygen reduction ability of cerium oxide is due to its properties similar (although weaker) to those of europium. The ability of terbium to have the valence of +4 in its compounds does not improve the properties of the support either, and so the promoting of the performance of cerium oxide takes place according to Reaction Equation (IV). The oxidation of cerium is promoted by the reduction of europium.

Table 5 shows the results of oxygen adsorption measurements performed on Samples 1-7. The measurements were carried out using a Carlo Erba Sorptomatic 1900 apparatus, and the measuring temperature was +25 °C. The amount of oxygen bound to the catalyst by chemisorption describes in Table 5 the oxygen binding capacity of the catalyst. The total adsorption also includes the oxygen bound to the catalyst by physisorption. The results show that europium, terbium and praseodymium added to cerium increase the oxygen binding capacity of a three-way catalyst. However, with europium the effect is not very regular. According to the results, terbium promotes most the oxygen binding capacity of a three-way catalyst.

The ability of cerium oxide to promote the performance of the support in a three-way catalyst is associated with its ability to bind and release oxygen as the oxygen content of exhaust gas fluctuates.

Table 5

| Results of adsorption measurements performed on three-way catalysts. | | | | |
|---|---|---|---|---|
| Sample | $M_2O_3$ | $M_2O_3$ (%) | Adsorbed $O_2$ ($cm^3$/g) | |
| | | | Total adsorption | Chemisorption |
| 1 | - | - | 0.48 | 0.29 |
| 2 | $Eu_2O_3$ | 2.2 | 0.90 | 0.82 |
| 3 | $Eu_2O_3$ | 4.4 | 0.38 | 0.38 |
| 4 | $Eu_2O_3$ | 8.8 | 0.62 | 0.54 |
| 5 | $Eu_2O_3$ | 44 | 0.41 | 0.41 |
| 6 | $Pr_2O_3$ | 4.4 | 0.56 | 0.53 |
| 7 | $Tb_2O_3$ | 4.4 | 2.1 | 0.97 |

Thus it can be assumed that the performance of the support will improve if the oxygen binding capacity of cerium is promoted by means of some additive. A comparison of the results in Table 4 (catalytic performance) with the results in Table 5 (oxygen binding capacity) shows that it is not the increased oxygen binding capacity alone that improves the performance of the support; in addition, the speed of the change in the oxidation number of cerium has a significant effect on the performance of cerium oxide. For example, a considerably high oxygen adsorption result was obtained with terbium, but its catalytic performance was clearly poorer than that of europium.

## Claims

1. A support suitable for a three-way catalyst, the support containing cerium and characterized in that the support contains europium in an amount sufficient to promote the catalytic performance of cerium.

2. A support according to claim 1, characterized in that the support contains a mixed oxide between cerium and europium.

3. A support according to claim 1 or 2, characterized in that the content of europium in the support is less than 10% of the amount of cerium, but above the amount optionally present as an impurity in the cerium material used in the support.

4. A method of producing a support as claimed in any one of claims 1 to 3, characterized in that europium is introduced in to the support in an amount sufficient to promote the catalytic performance of cerium.

5. A method according to claim 4, characterized in that it comprises a heating step in which a mixed oxide between cerium and europium is formed.

6. A method according to claim 5, characterized in that after the heating step the mixed oxide formed is added to the other support materials.

7. A method according to claim 5, characterized in that before the heating step a solution or salt containing europium is added to the other support materials.

8. A method according to claim 7, characterized in that the said solution is an aqueous solution of europium nitrate and the said salt is europium nitrate.

9. A three-way catalyst suitable for purifying exhaust gases, characterized in that it comprises a carrier and, on the carrier, a support as claimed in any one of claims 1 to 3 or produced according to any one of claims 4 to 8 and at least one catalytically active element attached to the support.

## Patentansprüche

1. Unterlage, die für einen Dreiwegekatalysator geeignet ist und die Cer enthält, dadurch gekennzeichnet, daß die Unterlage Europium aufweist in einer Menge, die ausreicht, um die katalytische Leistung von Cer zu verbessern.

2. Unterlage nach Anspruch 1, dadurch gekennzeichnet, daß diese ein gemischtes Oxid von Cer und Europium enthält.

3. Unterlage nach Anspruch 1 oder 2, dadurch gekennzeichnet, daß der Gehalt an Europium in der Unterlage weniger als 10 % der Menge Cer ist, jedoch oberhalb jener Menge liegt, die als Verunreinigung in Cer-haltigem Material, das in der Unterlage verwendet wird.

4. Verfahren zum Erzeugen einer Unterlage nach einem der Ansprüche 1 bis 3, dadurch gekennzeichnet, daß Europium in die Unterlage eingeführt wird in einer Menge, die ausreicht, um die katalytische Leistung von Cer zu verbessern.

5. Verfahren nach Anspruch 4, dadurch gekennzeichnet, daß ein Aufheizschritt angewandt wird, bei welchem ein gemischtes Oxid aus Cer und Europium gebildet wird.

6. Verfahren nach Anspruch 5, dadurch gekennzeichnet, daß das gemischte Oxid nach dem Heizschritt dem übrigen Unterlagenmaterial zugegeben wird.

7. Verfahren nach Anspruch 5, dadurch gekennzeichnet, daß vor dem Heizschritt eine Lösung oder ein Salz, enthaltend Europium, den anderen Unterlagenmaterialien zugegeben wird.

8. Verfahren nach Anspruch 7, dadurch gekennzeichnet, daß die Lösung eine wässrige Lösung aus Europiumnitrat, und das genannte Salz Europiumnitrat ist.

9. Dreiwegekatalysator zum Reinigen von Abgasen, dadurch gekennzeichnet, daß dieser einen Träger und auf dem Träger eine Unterlage nach einem der Ansprüche 1 bis 3 aufweist, oder hergestellt nach einem der Ansprüche 4 bis 8 sowie wenigstens ein an der Unterlage haftendes, katalytisch aktives Element aufweist.

## Revendications

1. Un support convenable pour un catalyseur à triple activité, le support contenant du cerium, et étant caractérisé en ce que le support contient de l'europium en une quantité suffisante pour favoriser les performances catalytiques du cérium.

2. Un support selon la revendication 1, caractérisé en ce que le support contient un oxyde mixte de cerium et d'europium.

3. Un support selon l'une quelconque des revendications 1 ou 2, caractérisé en ce que la teneur en europium du support est inférieure à 10% de la quantité de cerium, mais supérieure à la quantité éventuellement présente en tant qu'impureté dans le matériau contenant du cerium utilisé dans le support.

4. Un procédé de fabrication d'un support selon l'une quelconque des revendications 1 à 3, caractérisé en ce que l'on introduit de l'europium dans le support en une quantité suffisante pour favoriser les performances catalytiques du cerium.

5. Un procédé selon la revendication 4, caractérisé en ce qu'il comprend une étape de chauffage dans laquelle on forme un oxyde mixte de cerium et d'europium.

6. Un procédé selon la revendication 5, caractérisé en ce qu'après l'étape de chauffage, on ajoute l'oxyde mixte formé à d'autres matériaux supports.

7. Un procédé selon la revendication 5, caractérisé en ce qu'avant l'étape de chauffage, on ajoute une solution ou un sel contenant de l'europium aux autres matériaux supports.

8. Un procédé selon la revendication 7, caractérisé en ce que la solution est une solution aqueuse de nitrate d'europium, et ledit sel est du nitrate d'europium.

9. Un catalyseur à triple action convenant à la purification de gaz d'échappement, caractérisé en ce qu'il comprend une base, et sur la base un support selon l'une quelconque des revendications 1 à 3, ou obtenu selon l'une quelconque des revendications 4 à 8, et au moins un élément catalytiquement actif fixé au support.

Fig 1